(19) Europäisches Patentamt

European Patent Office

Office européen des brevets

(11) **EP 0 939 109 B1**

(12) **EUROPEAN PATENT SPECIFICATION**

(45) Date of publication and mention
of the grant of the patent:
**24.09.2003   Bulletin 2003/39**

(51) Int Cl.[7]: **C09D 4/06**
// (C09D4/06, C08F290:06),
(C09D4/06, C08F265:00)

(21) Application number: **99420049.1**

(22) Date of filing: **26.02.1999**

(54) **UV curable resin composition for coating**

UV-härtbare Harzzusammensetzung für Beschichtungen

Composition de résines durcissables aux rayons UV pour revêtement

(84) Designated Contracting States:
**AT DE FR GB IT**

(30) Priority: **27.02.1998   JP   4831198**
**26.01.1999   JP   1768399**
**03.02.1999   JP   2671599**

(43) Date of publication of application:
**01.09.1999   Bulletin 1999/35**

(73) Proprietor: **FUJIKURA KASEI CO., LTD.**
**Itabashi-ku, Tokyo (JP)**

(72) Inventors:
• **Isogai, Takashi,**
**Fujikura Kasei CO.LTD. R&D Center**
**Kitakatsushika-gun, Saitama-Ken (JP)**

• **Ohara, Noboru,**
**Fujikura Kasei CO.LTD., R&D Center**
**Kitakatsushika-gun, Saitama-Ken (JP)**

(74) Representative: **Guerre, Dominique et al**
**Cabinet Germain et Maureau,**
**12, rue Boileau,**
**BP 6153**
**69466 Lyon Cedex 06 (FR)**

(56) References cited:
**EP-A- 0 134 494        EP-B- 0 035 272**
**FR-A- 2 337 187**

Remarks:
The file contains technical information submitted
after the application was filed and not included in this
specification

**Description**

Field of the Invention

The present invention relates to a UV curable resin composition for coating, and more specifically, it relates to a UV curable resin composition which is useful as a surface coating for molded polycarbonate resin products, and which can form a cured film by UV irradiation, with excellent scarring resistance, weatherability, adhesiveness, and flexibility.

Background Art

Plastics such as acrylic resin, polycarbonate resin, polystyrene resin, and ABS resin are not only light and have excellent impact resistance, but because they also have distinctive features such as ease of polymer processing at low cost, molded articles produced from these plastics are used in a wide range of fields.

However, molded articles of these plastics have the problem that, because their surface hardness is insufficient, they have the drawbacks that their surfaces are easily damaged by rubbing and scratching, and the value of these goods is significantly degraded as a result of damage occurring on their surface. As a result, it is common to use a so-called coating film with excellent scarring resistance to protect the surface of molded articles from damage.

Furthermore, the above plastics, for example, polycarbonate resin, in addition to being easily damaged, also have inferior weatherability. Plastic molded articles manufactured from such resins have the problem that, when used in environments where they are exposed to direct sunlight, cracking and crazing occur, and degradations of their external appearance such as discoloration readily occur. In such a case, it is common to solve the occurrence of such problems by using a coating material which can prevent the degradation of the external appearance of molded articles, and also has excellent scarring resistance.

Due to the above situation, so far, much research has been done related to coating materials having excellent scarring resistance and weatherability. For example, Japanese Patent Application, Second Publication No. 63-28094 and corresponding European Patent Specification EP-B1-0 035 272 propose a coating material in which 5 - 35 parts by weight of a UV absorber, 0.5 - 8 parts by weight of alkyl(meth)acrylate polymer and 0.01 - 6 parts by weight of a photosensitizer are added to 100 parts by weight of a monomer mixture consisting of 40 - 100 wt. % polyfunctional monomer with a molecular weight of 900 or less and 60 to 0 wt. % of mono- or bi- functional monomers having one or two (meth)acryloyloxy groups per molecule.

The above coating composition has a polyfunctional monomer having three or more functional groups per molecule as its main component, and as a result, the crosslinking density is high, and therefore, it has a high surface hardness, and it can form a coating film with excellent scarring resistance. On the other hand, a coating film with a high crosslinking density will have a high degree of internal contraction stress when it is cured. A coating film with such a high degree of internal contraction stress has the problem that, when it is subjected to repeated heating, or when exposed for a long period of time to a natural environment outdoors, defects such as film cracking and film peeling will readily occur. Especially, if a coating composition with high crosslinking density is subjected, as a coating film, to curing or the like for a short time, there is a tendency for the internal contraction stress to increase, and as a result, coating film defects such as film cracking and peeling will readily occur.

In addition, because the internal contraction stress of the coating film tends to increase as the thickness of the film increases, the coating composition must be applied as a coating film with the thinnest and most uniform thickness possible. When the coating film is applied to molded articles with complicated shapes, there is the problem that it becomes difficult to apply a thin and uniform film thickness, and a high level of coating technology is necessary.

Further, Japanese Patent Application, First Publication No. 5-98187 proposes a UV curable clear-coat composition comprising 30 - 90 wt. % of aliphatic urethane acrylate with a molecular weight of 1200 - 2600, 15 - 70 wt. % of a polyfunctional acrylate having a molecular weight of 170 - 1000 and at least two polymerizable unsaturated groups per molecule, and a photopolymerization initiator or a sensitizer.

The above clear-coat composition shows improved coating film characteristics such as flexibility, durability, thermal stability, crack resistance, chemical resistance and adhesiveness, as a result of combining specific aliphatic urethane acrylate with polyfunctional acrylate monomers having polymerizable unsaturated groups in specified amounts. Although the coating film characteristics cited in the above publication are satisfactory for comparatively mild use conditions, including those disclosed in the examples of said publication (such as, for example, heat resistance testing at 80°C for 2 hours, weathering test for 750 hours with a weather meter) and the computer keyboard use example, this composition is not suitable for long term use exposed to a harsh natural environment such as the outdoors, for example, for use as a headlight lens for automobiles.

Furthermore, Japanese Patent Application, First Publication No. 5-17706 proposes a paint composition which is curable by UV irradiation in which a monomer mixture comprising a (di)pentaerythritol (meth)acrylate type polyfunctional monomer, an isocyanurate type monomer having two or more (meth)acryloyloxy groups, and a monomer having (meth)acryloyloxy group, and at least one of hydroxy group, a cyclic ether bond or a chain ether bond is combined in a specific proportion with a UV absorber and alkyl (meth)acrylate polymer.

The above paint composition is excellent in the point that its main components are polyfunctional monomers, for example, (di)pentaerythritol (meth)acrylates, and as a result, a curable coating with excellent abrasion resistance can be formed. However, if tested under conditions simulating an outdoor environment with direct exposure to sunlight, especially for prolonged periods of time, reduced adhesiveness of the coating film and occurrence of cracks can be observed. Further, if applied to the surface of an article of molded resin such as polycarbonate resin which is easily subject to fading or degradation, there is the problem that the coating film is not effective in preventing degradation of said molded article over long periods of time. For example, in an accelerated weathering test using an accelerated weathering testing device, the deterioration preventing effect remains effective for about 2000 hours, and after that the degradation of the external appearance reaches an observable level. Recently, a coating composition with deterioration preventing effects which last for more than 4000 hours has been desired.

EP-A-0 134 494 describes UV-curable liquid coating compositions comprising an aliphatic urethane acrylate oligomer, a polymer of methyl methacrylate, a photopolymerization initiator and a UV absorber. These compositions exhibit strong adhesion to metal and plastic surfaces. Coatings providing improved crack resistance are not described.

FR-A1-2 337 187 describes adhesive coatings comprising acrylate or methacrylate monomers, a polymerization initiator, an organic solvent and an organic polymer such as an alkyl methacrylate polymer.

As described above, there is the problem that with coating compositions for molded resin articles, especially in simulated outdoor use, the film's scarring resistance, and the film's adhesiveness or crack resistance, which tend to be mutually exclusive, cannot both be sufficiently satisfied.

## SUMMARY OF THE INVENTION

The present invention was developed for the object of providing a resin composition for coating use which can be cured by UV irradiation and which can sufficiently prevent deterioration of the body of a molded article even if used outdoors, especially for a long period of time, and which also has excellent scarring resistance, film adhesiveness, crack resistance, and the like. As a result, it was found that the problem of the prior coating compositions for plastics can be solved by using a coating film forming component which is obtained by selecting, from acryl type monomers with a (meth)acryloyloxy group, acryl-type monomers comprising an acryloyloxy group, ether bonds, and acryl-type monomers having one or two acryloyloxy groups, and combining this with a specific amount of methyl methacrylate polymers and aliphatic urethane acrylate oligomers.

That is, the present invention solves the above problem by providing a UV curable resin composition for coating, with the following essential components:

at least 100 parts by weight of the following coating film forming components (a) to (c):

(a) 10 - 70 wt. % of a mono- or bi- functional monomer having a molecular weight of 130 - 700, and having ether bond and one or two acryloyloxy groups per molecule,
(b) 5 - 60 wt. % of aliphatic urethane acrylate oligomer,
(c) 10 - 30 wt. % of methyl methacrylate polymer having a molecular weight of 10,000 to 200,000 and containing at least 90 wt.% of methyl methacrylate,

and the addition of the following components to the 100 parts by weight of the coating film forming components:

(e) 2-10 parts by weight of a photopolymerization initiator, and
(f) 2 - 20 parts by weight of a UV absorber.

Further, a preferable embodiment of the present invention comprises the following coating film forming components:

(a) 10 - 70 wt. % of a mono- or bi- functional monomer having a molecular weight of 130 - 700, and having ether bond and one or two acryloyloxy groups per molecule,
(b) 5 - 60 wt. % of aliphatic urethane acrylate oligomer,
(c) 10 - 30 wt. % of methyl methacrylate polymer having a molecular weight of 10,000 to 200,000, and containing at least 90 wt. % methyl methacrylate,
(d) 5 - 50 wt. % of a polyfunctional monomer having a molecular weight of 250 - 700, having three or more acryloyloxy groups per molecule and which also includes as necessary ingredients, relative to 100 parts by weight of said coating film forming components : (e), and (f).

Further, the lamp cover for automobiles of the present invention has the feature that a UV curable resin composition for coating is applied to a lamp cover obtained from polycarbonate resin and is cured.

In the UV curable resin composition for coating use of the present invention, an acryl type monomer having acryloyloxy group and ether bond, is combined with a specified amount of an aliphatic urethane acrylate oligomer and a methyl methacrylate polymer with a limited molecular weight as coating film forming components, and as a result it is possible to form a coating film having excellent scarring resistance. Further, by limiting the number of functional groups in the acryl type monomer used here to one or two, it is possible to obtain a coating film with a controlled crosslinking density, and it is also possible by means of this to improve the adhesiveness, and to prevent the occurrence of film cracking. Furthermore, appropriate combinations of said coating film forming components and photopolymerization initiator and UV absorber make it possible to form a coating film having excellent weatherability lasting for a long period of time, and especially, when used on the surface of a plastic molded article, such as one of polycarbonate, which has inferior weatherability, it becomes possible for the molded article to be used in a severe environment such as a outdoor environment.

Further, in the automobile lamp cover of the present invention, the above mentioned UV curable resin composition for coating is applied to a lamp cover body made of polycarbonate resin, and is cured, and therefore, the scarring resistance and weatherability are greatly improved and the automobile lamp cover can endure use for a long period of time under severe conditions.

DESCRIPTION OF THE PREFERRED EMBODIMENTS

The mono- or bi- functional monomer (a) of the present invention, having a molecular weight of 130 - 700 and having ether bond and one or two acryloyloxy groups per molecule, is a component which adds good adhesiveness to the base body and flexibility to the formed coating film. In said monomer (a), if the functional group is not an acryloyloxy group (for example, if it is a methacryloyloxy group) or if the number exceeds two, or if the molecule does not have an ether bond, defects such as the generation of film cracks may occur because of the reduced flexibility and reduced adhesiveness of the coating film.

Further, the limitation of the molecular weight of the monomer to the range of 130 - 700, and more preferably to the range of 130- 500 in the present invention is important. If the molecular weight is below 130, the attained flexibility is insufficient, and if it exceeds 700, the proper crosslinking density necessary for the film cannot be obtained and there is the concern that as a result of insufficient crosslinking, the scarring resistance will be reduced, and as a result of precipitation of additives, the coating film is subject to whitening.

In the present invention, it is necessary for the content of the above mono- or bifunctional monomer (a) to be restricted to the range of 10 - 70 wt. % of the coating film forming components, preferably 10 - 50 wt. %, most preferably 20 - 50 wt. %. If the content is less than 10 wt. %, the film flexibility is insufficient, and film cracks occur readily, and if the content exceeds 70 wt. %, the crosslinking density necessary for the coating film cannot be obtained.

Specific examples of the above mono- or bi- functional monomer (a) include tetrahydrofurfuryl acrylate, methoxy-(mono, di, tri or poly)-ethylene glycol acrylate, methoxy-(mono, di, tri, or poly)-propylene glycol acrylate, cyclohexyloxyethyl acrylate, ethoxy-(mono, di, tri or poly)-ethylene glycol acrylate, ethoxy-(mono, di, tri or poly)-propylene glycol acrylate, (di, tri, or poly)-ethylene glycol diacrylate, (di, tri, or poly)-propylene glycol diacrylate, methoxyglycerin-(mono, di, tri or poly)-ethylene glycol diacrylate, methoxyglycerin-(mono, di, tri or poly)-propylene glycol diacrylate, ethoxyglycerin-(mono, di, tri or poly)-ethylene glycol diacrylate, ethoxyglycerin-(mono, di, tri or poly)-propylene glycol diacrylate, hydrogenated bisphenol A diacrylate, hydrogenated bisphenol A diethylene glycol diacrylate, hydrogenated bisphenol A (di, tri, or poly)-propylene glycol-(mono or di)-acrylate, dipentaerythritol diacrylate and the like. These monomers can be used alone or can be used in combinations of two or more.

The aliphatic urethane acrylate oligomer (b) used in the present invention is a component which imparts scarring resistance and the appropriate degree of flexibility to the coating film. In this component, if an oligomer without an aliphatic group urethane bond is used, the flexibility and scarring resistance will not be satisfactory.

Examples of the above aliphatic urethane acrylate oligomer (b) include reaction products of aliphatic isocyanate compounds (such as isophorone diisocyanate, hexamethylene diisocyanate, and 4,4'-dicyclohexyl diisocyanate) and polyfunctional acrylate compounds (such as trimethylolpropane diacrylate, pentaglyceroldiacrylate, pentaerythritoltriacrylate, dipentaerythritoltriacrylate, dipentaerythritoltetraacrylate). Preferable examples of the urethane acrylate oligomer (b) are those with a molecular weight limited to 500 - 1500 and an oligomer with three or more functional groups, or an oligomer with a molecular weight of 400 or less per one functional group in a molecule. By using an oligomer with these molecular weight limitations, the scarring resistance and flexibility of the formed coating film will be improved. Further, it is necessary for the content of said urethane acrylate oligomer (b) to be restricted to the range of 5 - 60 wt. %, preferably 5 - 50 wt. % of the film forming components, and if the content is less than 5 wt. %, the effect of imparting flexibility and scarring resistance to the formed coating film will be small, and if it exceeds 60 wt. %, the adhesiveness of the film will decrease and cracks will readily occur. Specific examples of the aliphatic urethane acrylate oligomer (b) include EBECRYL 1290K (Trade mark) produced by DAICEL-UCB CO., LTD., SHIKO UV-1700B (Trade Mark) produced by THE NIPPON SYNTHETIC CHEMICAL INDUSTRY CO., LTD., SETACURE 576 (Trade Mark) produced by ACROSS CHEMICALS of the United Kingdom, and the like.

The methyl methacrylate polymer (c) used in the present invention is a component which imparts a good balance of transparency, weatherability, scarring resistance, flexibility and adhesion to the base layer, and it is necessary that its molecular weight be in the range of 10,000 - 200,000. If the molecular weight is less than 10,000, the adhesion to the base layer and the weatherability are reduced, and if the molecular weight exceeds 200,000, the viscosity of the composition for forming a coating increases and as a result, the spreadability decreases and it becomes difficult to obtain a smooth film surface. It is also important to restrict the content of said methyl methacrylate polymer (c) to within 10 - 30 wt. % of the coating film forming components. If the content is less than 10 wt. %, when exposed to severe conditions, a decrease in the adhesiveness of the coating film can be seen, and if it exceeds 30 wt. %, the scarring resistance will be reduced.

The methyl methacrylate polymers which are used in the present invention include methyl methacrylate homopolymers, but copolymers containing at least 90 wt. % of methyl methacrylate is also to be used as the methyl methacrylate polymer of the present invention. In the case of using said copolymers, examples of the comonomer include ethyl (meth)acrylate, propyl (meth)acrylate, n- or iso- butyl (meth)acrylate, amyl (meth)acrylate, hexyl (meth)acrylate, heptyl (meth)acrylate, octyl (meth)acrylate, 2-ethyl-1-hexyl (meth)acrylate, 3-ethyl-1-pentyl (meth)acrylate, 3-methyl-1-butyl (meth)acrylate, 2-ethyl-1-butyl (meth)acrylate, 2-heptyl (meth)acrylate and the like.

The above methyl methacrylate polymer (c) can be used in a dissolved state in the mono- or bi- functional monomer (a) or the aliphatic urethane acrylate oligomer (b), and said methyl methacrylate polymer (c) can also be used in a dissolved state in a suitable organic solvent. Especially, it is preferable to use a polymer solution obtained by solution polymerization in an organic solvent of the methyl methacrylate monomer.

The UV curable resin composition for coating of the present invention (hereinbelow referred to as the coating composition of the present invention) is obtained from mixing the coating film forming components, i. e. the above mono- or bi- functional monomer (a), aliphatic urethane acrylate oligomer (b) and methyl methacrylate polymer (c), in the above specified compositional ranges. In this case, if the proportion of any component falls outside the above mixture ratio, the balance between scarring resistance, flexibility, and adhesiveness will be destroyed, and it will not be possible to obtain a coating film which can perform well in practical use, especially if it is assumed that the coating film will be used outdoors for extended periods.

Further, according to a preferable embodiment of the present invention, it is preferable to use in addition to each of the above coating film forming components, a polyfunctional monomer (d) having a molecular weight of 250 - 700 and three or more acryloyloxy groups per molecule, and it is further preferable to use a polyfunctional monomer with a molecular weight of 150 or less per functional group of the molecule. If the molecular weight of the multifunctional monomer (d) is less than 250, the balance of flexibility and adhesiveness of the coating favorably imparted by the three components, (a) the mono- or bi- functional monomer, (b) the aliphatic urethane acrylate oligomer, and (c) the methyl methacrylate polymer, will be destroyed, and if the molecular weight exceeds 700, the effect of the scarring resistance will become small. Further, if the molecular weight per functional group on the molecule exceeds 150, the effect of the scarring resistance will become small.

The above polyfunctional monomer (d) is effective to further improve the scarring resistance of the formed coating film. Said polyfunctional monomer (d) is preferably added so that it is included in a range of 5 - 50 wt. % of the coating film forming components. If the added amount is less than 5%, the effect of addition is small, and if it exceeds 50%, the effect of improving the scarring resistance is large, but the crosslinking density also becomes large, and therefore, the internal contraction stress of the formed coating film also becomes large, and the adhesiveness decreases and defects such as cracking readily occur. In the present invention an especially preferable addition amount is 10 - 40 wt. %.

Specific examples of the polyfunctional monomer (d) which can be used in the present invention include trimethylolpropane triacrylate, pentaerythritol (tri or tetra)acrylate, pentaglycerol triacrylate, triacryloxyethyloxyhydridemellitate, pentaerythritol tetraacrylate, tetraacryloxyethyloxyhydridepyromellitate, or dipentaerythritol (tri, tetra, penta or hexa)-acrylate, and these monomers can be used alone or in combinations of two or more.

In the coating composition of the present invention, a photopolymerization initiator (e) is used to allow curing of the above coating film forming components. The preferable amount used per 100 parts of the coating film forming components is 2 -10 parts, and more preferably 4 - 8 parts. If the content of the photopolymerization initiator (e) is less than 2 parts by weight, the hardening of the coating film by UV rays will be insufficient, and it is not preferable for the content to exceed 10 parts by weight, because the weatherability of the coating film will decrease, and the cured film may be subject to coloring

As a suitable photopolymerization initiator (e), acetophenone type compounds, benzoin ether type compounds, benzophenone type compounds, phosphine oxide type compounds and the like can be used, and as specific examples of these include carbonyl compounds such as benzoin, benzoinmethylether, benzoinethylether, benzoinisopropylether, acetoin, butyroin, toluoin, benzil, benzophenone, p-methoxybenzophenone, diethoxyacetophenone, $\alpha,\alpha$-dimethoxy-$\alpha$-phenylacetophenone, methylphenylglyoxylate, ethylphenylglyoxylate, 4,4'-bis (dimethylaminobenzophenone), 2-hydroxy-2-methyl-1-phenylpropane-1-on; 1-hydroxycyclohexylphenylketone; sulfur compounds such as tetramethylthiuram monosulfide, tetramethylthiuram disulfide; azo compounds such as azobisisobutyronitrile, and 2,2'-azobis(2,4-dimethylvaleronitrile), and peroxide compounds such as benzoyl peroxide, ditertiarybutyl peroxide.

Further, in the coating composition of the present invention, a UV absorber (f) is used to absorb the UV rays that penetrate the coating film to prevent degradation of the surface of the plastic which is the base body, in addition to increasing the weatherability of the formed film. The preferable amount used, per 100 weight parts of the above coating film forming components, is 2 - 20 weight parts, and more preferably 5 - 15 weight parts.

If the amount of UV absorber (f) used is less than 2 weight parts, the effect of improving the weatherability of the coating film is small, and if it exceeds 20 weight parts, it is effective in preventing the degradation of the base plastic body and of the weatherability of the film, but, when irradiating with UV radiation for curing the coating film, the radiation is absorbed by the UV absorber which leads to insufficient curing.

In the present invention, examples of a suitable UV absorber (f) include salicylate type compounds, benzophenone type compounds, benzotriazole type compounds and the like, and specific examples include 2-hyroxybenzophenone, 5-chloro-2-hydroxybenzophenone, 2,4-dihydroxybenzophenone, 2-hydroxy-4-methoxybenzophenone, 2-hydroxy-4-octyloxybenzophenone, 4-dodecyloxy-2-hydroxybenzophenone, 2-hydroxy-4-octadecyloxybenzophenone, 2,2'-dihydroxy-4-methoxybenzophenone, 2,2'-dihydroxy-4,4'-dimethoxybenzophenone, phenylsalicylate, p-tert-butylphenylsalicylate, p-(1,1,3,3,-tetramethylbutyl) phenylsalicylate, 3-hydroxyphenylbenzoate, phenylene-1,3-dibenzoate, 2-(2-hydroxy-5-methylphenyl)benzotriazole, 2-(5-methyl-2-hydroxyphenyl)benzotriazole, 2-(2-hydroxy-5-tert-butylphenyl)-5-chlorobenzotriazole, 2-(2-hydroxy-3,5-di-tert-butylphenyl)benzotriazole, 2-(2-hydroxy-5-tert-butylphenyl)benzotriazole, and 2-(2-hydroxy-4-octyloxyphenyl)benzotriazole. These can be used as UV absorber (f) either alone or in combinations of two or more.

The coating composition of the present invention can be manufactured by uniformly mixing the prescribed amounts of the above mono- or bi- functional monomer (a), the aliphatic urethane acrylate oligomer (b), the methyl methacrylate polymer (c) and as necessary the polyfunctional monomer (d), adding to this the prescribed amount of the photopolymerization initiator (e) and the UV absorber (f), and then making the mixture uniform by stirring. Further, appropriate amounts of various additives conventionally used in the coating industry, for example, antioxidants, antifoaming agents, levelling agents, delustrants, photostabilizing agents, (for example, hindered amine type compounds), dyes and pigments can be added as necessary.

Commonly known coating methods such as brush coating, flow coating, immersion or dip coating and spray coating can be used. When coating, it is preferable to adjust the viscosity of the coating composition of the present invention using an organic solvent, from the point of view of improving the operability, smoothness and uniformity of the coated film, and the adhesion of the cured coating film to the base body. Examples of preferable organic solvents are ethanol, isopropanol, butanol, toluene, xylene, acetone, methylethylketone, ethylacetate, and butylacetate.

As the amount of the coating composition of the present invention coated onto the plastic molded article, it is preferable to use a cured film thickness of 1 - 30 µm. It is not preferable to use a cured thickness of the film of less than 1 µm, because the effect of preventing surface deterioration of the plastic molded article is small, and if it exceeds 30 µm, deterioration of the adhesion of the film to the base body and the occurrence of cracking can be observed.

As the curing means of the coating composition of the present invention, it is possible to carry out curing by irradiation of ordinary activating rays, but it is preferable to carry out the curing by UV light in order to provide effects such as crack prevention and scarring resistance, characteristic of the present invention. It is preferable to use a dose of radiation of 500 - 3000 mJ/cm$^2$.

The coating composition of the present invention is useful for imparting excellent weatherability and scarring resistance to molded plastic articles. As the base material of the molded plastic article, many kinds of plastic base materials can be used irrespective of whether they are thermoplastic or thermosetting plastics, and specifically, polymethylmethacrylate resin, polycarbonate resin, polystyrene resin, acrylonitrile-styrene copolymer resin, polyvinylchloride resin, acetate resin, ABS resin, polyester resin, and polyamide resin can be used. Among these plastics, especially for resin molded articles of plastics which themselves have no weatherability, and for which if used outdoors, degradation such as color change and deterioration readily occur, especially polycarbonate resin, by coating using the coating composition of the present invention, it is possible to impart excellent characteristics of scarring resistance and weatherability and prevention of UV deterioration to the molded article.

The lamp cover for automobiles of the present invention includes covers for many types of lamps such as headlights, stop lights and turn signal lights, and lamps which are simultaneously used as condenser lenses, and the coated covers comprise covers coated with a coating film of the UV curable resin composition of the coating composition of the present invention onto the body of a lamp cover formed by injection molding of a polycarbonate resin, and irradiating with UV radiation to cure the coating film.

This lamp cover can sufficiently endure use in severe conditions for long periods as a lamp cover for automobiles, and has scarring resistance and weatherability.

Examples

The present invention is specifically explained below based on examples and comparative examples. Further, the proportions of each components throughout the examples are given on a weight basis unless specified otherwise.

Example 1

The UV curable resin composition for coating of the present invention was manufactured by uniformly mixing with stirring 30 parts of hydrogenated bisphenol A diethyleneglycol diacrylyate (molecular weight: 424,2 functional groups), 50 parts of aliphatic urethane acrylate oligomer [DAICEL-UCB CO., LTD.: EBECRYL 1290K], (Trade Mark) 20 parts of methyl methacrylate polymer (molecular weight: 45000), 10 parts of photopolymerization initiator (1-hydroxycyclohexylphenylketone), 15 parts of UV absorber [10 parts of2-(5-methyl-2-hydroxyphenyl) benzotriazole + 5 parts of 2-hydroxy-4-methoxybenzophenone].

The resin composition prepared as above was coated using a bar coater onto a plate of polycarbonate resin (LEXAN LS - 2 (Trade Mark) produced by GE PLASTICS JAPAN LTD., thickness 3mm) annealed for 3 hours at 120°C so that the film thickness after curing was 10 μm, and the coated film was then cured by irradiation with UV radiation from a high-pressure mercury-vapor lamp, to prepare a test piece, which was tested by the below testing methods, and the results of the tests are shown in Table 3.

Further, at the time of curing, the dose of UV radiation was measured to be 1200 mJ/cm$^2$ with a UV-350N INDUSTRIAL UV CHECKER (Trade Mark) by JAPAN STRAGE BATTERY CO., LTD.

Testing Method

(1) Transparency: the haze (scattered light tranksamission/total light transmission, %) measured using a model MGM-20 (Trade Mark) (produced by SUGA TEST INSTRUMENTS CO., LTD.) was used as the reference for evaluation of the transparency.

(2) Scarring resistance: after testing under conditions in which steel wool (#0000), to which a load of 140g/cm$^2$ was applied, was placed on the coating film surface of the test piece and 11 back and forth cycles were made by rubbing tester (in conformity with the method stipulated in FMVSS (US) No. 108-S.6.2), the external appearance of the surface of the coating film was observed by eye, and evaluated according to the criteria below.

○: There is nearly no scarring on the surface of the coating film
×: Scarring is noticeable on the surface of the coating film.

Further, after the test was concluded, the film surface of the test piece was washed and dried, and the haze was measured in the same was as the above transparency test (1), and the haziness of the sample was calculated according to the following formula.

Haziness (%) = [haze (%) after scarring resistance test] - [haze (%) before scarring resistance test]

(3) Coating film adhesiveness: according to the cross-cut adhesion test based on JIS K 5400 8.5.2, cuts were formed at 1 mm intervals to penetrate the coating film on the test piece and to reach the base body, and first a grid of 100 boxes was made, and adhesive tape was stuck on top of this grid, and next, after the tape was torn off, the adhesion of the coating film was visually observed, and the number of boxes which remained adhered without peeling off was used as the evaluation criteria for adhesiveness.

(4) Heat resistance: a test piece was left for 240 hours exposed to the atmosphere at 120 °C, and the external appearance and the presence or absence of cracking of the film were visually observed, and evaluated according to the evaluation standards below. Further, after the observation of the coating film of the test piece was completed, the adhesiveness was evaluated by testing according to the above coating film ahesiveness testing method (3).

External Appearance

○: No abnormalities such as yellowing were observed on the coating film.
×: Abnormalities such as yellowing were observed on the coating film. Cracking
○: No cracking was observed.
×: Cracking was observed.

(5) Chemical Resistance: An acid resistance test reagent (0.1 mol/l aqueous solution of HCl) and an alkali resistance test reagent (0.1 mol/l aqueous solution of NaOH) were each applied dropwise onto the coating film surface of a test piece and after standing in the atmosphere at 25°C for 24 hours, changes to the external appearance of the film were observed, and evaluated according to the evaluation criteria below.

○: No changes observed on the film.
×: Changes such as swelling or cloudiness observed.

(6) Weatherability: Using an accelerated weatherability testing apparatus (model Sunshine Weather-O-Meter-WEL-SUN-DC-B (Trade Mark), by SUGA TEST INSTRUMENTS CO., LTD.), testing with conditions of a black panel temperature of 63 ± 3°C and including 12 minutes of rainfall within 60 minutes (based on weather test for automobile parts, JIS D 0205, referring to WAN-1S), the external appearance of the coating film and the polycarbonate resin plate, and the presence or absence of cracking of the coating film were evaluated using the evaluation criteria below.
External Appearance

○: No abnormalities such as yellowing were observed on the coating film and the polycarbonate resin plate.
×: Abnormalities such as yellowing were observed on the coating film and the polycarbonate resin plate.
※: Film whitening was observed

Cracking

○: No cracking was observed.
×: Cracking was observed.

Further, after the observation of the test piece was completed, the adhesiveness was evaluated by testing according to the above film adhesiveness testing method (3), and the transparency was measured according to the above transparency test (1). In addition, the Y.I value (yellowing degree) of the test piece was measured using a color computer (model SM-7 (Trade Mark) by SUGA TEST INSTRUMENTS CO., LTD.) and the changes in the yellowing degree were evaluated.

Examples 2 - 10, Comparative Examples 1 - 16

Using each of the compounds below, according to the formulas in Tables 1 and 2 below, UV curable resin compositions were produced in the same way as in Example 1, and were evaluated using the same testing methods as in Example 1. The results of each evaluation are shown in Tables 3 and 4.

Component (a): mono- or bi- functional monomer

A-1: tetrahydrofurfuryl acrylate (molecular weight: 144, 1 functional group)
A-2: hydrogenated bisphenol A diethyleneglycol acrylate (molecular weight: 424, 2 functional groups)
A-3: hydrogenated bisphenol A hexapropyleneglycol diacrylate (molecular weight: 772, 2 functional groups)

Component (b): aliphatic urethane acrylate oligomer

B-1: EBECRYL 1290K (Trade Mark) produced by DAICEL-UCB CO., LTD. (molecular weight: 1000, 6 functional groups, molecular weight of 167 per functional group), (same as Example 1)

B-2: bis(acryloyloxyethyl)isocyanurate (molecular weight: 353, functional groups, molecular weight of 177 per functional group)

Component (c): methyl methacrylate polymer

C-1: methyl methacrylate polymer (same as that of Example 1, molecular weight: 45000)
C-2: methyl methacrylate polymer (molecular weight: 150000)

Component (d): polyfunctional monomer

D-1: dipentaerythritolhexaacrylate (molecular weight: 574, functional groups)
D-2: pentaerythritoltetraacrylate (molecular weight: 296, 4 functional groups)
D-3: KAYARAD DPCA-30 (Trade Mark) produced by NIHON KAYAKU CO., LTD. (molecular weight: 921, 6 functional groups, 1 functional group per molecular weight of 154)
D-4: trimethylpropane triacrylate (molecular weight: 296, functional groups, molecular weight of 99 per functional group)
D-5: 1,6-hexanediol diacrylate (molecular weight: 226, 2 functional groups, molecular weight of 113 per functional group)

Component (e): photopolymerization initiator

E-1: 1-hydroxycyclohexylphenylketone (the same as in Example 1)

Component (f): UV absorber

F-1: 2-(5-methyl-2-hydroxyphenyl)benzotriazole (the same as in Example 1)
F-2: 2-hydroxy-4-methoxy benzophenone (the same as in Example 1)

Table 1

| Mixture Components (parts) | | Example No. | | | | | | | | | Comparative Example No. | | | |
|---|---|---|---|---|---|---|---|---|---|---|---|---|---|---|
| | | 2 | 3 | 4 | 5 | 6 | 7 | 8 | 9 | 10 | 1 | 2 | 3 | 4 |
| Component (a) | A-1 | | | | | | 10 | | | | | | 33 | | |
| | A-2 | 35 | 10 | 70 | 15 | 40 | | 20 | 20 | 30 | | | | | 30 |
| Component (b) | B-1 | 20 | 60 | 20 | 5 | 30 | 25 | 35 | 40 | 50 | | | | 70 | 50 |
| | B-2 | | | | | | | | | | | | 17 | | |
| Component (c) | C-1 | 10 | 30 | 10 | 30 | 30 | 30 | 10 | 10 | | 3 | 5 | | | 8 |
| | C-2 | | | | | | | | | 20 | | | | | |
| Component (d) | D-1 | 35 | | | 50 | | 35 | 35 | | | | | | | 12 |
| | D-2 | | | | | | | | 30 | | | | 50 | | |
| | D-4 | | | | | | | | | | | 55 | | 30 | |
| | D-5 | | | | | | | | | | | 45 | | | |
| Subtotal | | 100 | 100 | 100 | 100 | 100 | 100 | 100 | 100 | 100 | 103 | 105 | 100 | 100 |
| Component (e) | E-1 | 5 | 5 | 5 | 10 | 2 | 5 | 5 | 5 · | 5 | 5 | 5 | 5 | 5 |
| Component (f) | F-1 | 10 | 10 | 10 | 10 | 8 | 10 | 10 | 10 | 10 | 10 | 10 | 10 | 10 |
| | F-2 | | | | 5 | | | | | | | | | |
| Total | | 115 | 115 | 115 | 125 | 110 | 115 | 115 | 115 | 115 | 118 | 120 | 115 | 115 |

## Table 2

| Mixture Components (parts) | | Comparative Example No. | | | | | | | | | | | |
|---|---|---|---|---|---|---|---|---|---|---|---|---|---|
| | | 5 | 6 | 7 | 8 | 9 | 10 | 11 | 12 | 13 | 14 | 15 | 16 |
| Component (a) | A-1 | | | | | | | | | | | 15 | |
| | A-2 | 30 | 5 | 75 | | 10 | 10 | 30 | 30 | | | | 20 |
| | A-3 | | | | 35 | | | | | | | | |
| Component (b) | B-1 | 20 | 45 | 15 | 20 | 10 | 70 | 40 | 40 | 50 | | | |
| | B-2 | | | | | | | | | | | 35 | 35 |
| Component (c) | C-1 | 35 | 30 | 10 | 10 | 20 | 20 | 20 | 20 | 25 | 25 | 20 | 15 |
| Component (d) | D-1 | 15 | 20 | | 35 | 60 | | 10 | 10 | | 50 | | |
| | D-3 | | | | | | | | | | | | 30 |
| | D-5 | | | | | | | | | 25 | 25 | 30 | |
| Subtotal | | 100 | 100 | 100 | 100 | 100 | 100 | 100 | 100 | 100 | 100 | 100 | 100 |
| Component (d) | E-1 | 5 | 5 | 5 | 5 | 5 | 5 | 13 | 8 | 5 | 5 | 5 | 5 |
| Component (f) | F-1 | 10 | 10 | 10 | 10 | 10 | 10 | 15 | 24 | 10 | 10 | 10 | 10 |
| | F-2 | | | | | | | | | | | | |
| Total | | 115 | 115 | 115 | 115 | 115 | 115 | 128 | 132 | 115 | 115 | 115 | 115 |

EP 0 939 109 B1

Table 3

| | | | Example No. | | | | | | | | | | Comparative Example No. | | |
|---|---|---|---|---|---|---|---|---|---|---|---|---|---|---|---|
| | | | 1 | 2 | 3 | 4 | 5 | 6 | 7 | 8 | 9 | 10 | 1 | 2 | 3 |
| Initial Performance | Transparency | | 0.7 | 0.6 | 0.7 | 0.7 | 0.6 | 0.8 | 0.7 | 0.6 | 0.6 | 0.7 | 0.6 | 0.8 | 1.2 |
| | Scarring Resistance | External Appearance | ○ | ○ | ○ | ○ | ○ | ○ | ○ | ○ | ○ | ○ | ○ | ○ | ○ |
| | | Hazeness | 1.1 | 0.8 | 1.3 | 4.1 | 0.9 | 1.8 | 0.7 | 1.0 | 0.8 | 1.0 | 1.0 | 0.6 | 0.7 |
| | Adhesiveness | | 100 | 100 | 100 | 100 | 100 | 100 | 100 | 100 | 100 | 100 | 100 | 100 | 100 |
| | Heat Resistance | External Appearance | ○ | ○ | ○ | ○ | ○ | ○ | ○ | ○ | ○ | ○ | ○ | ○ | ○ |
| | | Cracking | ○ | ○ | ○ | ○ | ○ | ○ | ○ | ○ | ○ | ○ | × | ○ | × |
| | | Adhesiveness | 100 | 100 | 100 | 100 | 100 | 100 | 100 | 100 | 100 | 100 | 100 | 100 | 0 |
| Chemical Resistance | Acid Resistance | External Appearance | ○ | ○ | ○ | ○ | ○ | ○ | ○ | ○ | ○ | ○ | ○ | ○ | ○ |
| | Alkali Resistance | External Appearance | ○ | ○ | ○ | ○ | ○ | ○ | ○ | ○ | ○ | ○ | ○ | ○ | ○ |
| Accelerated Weatherability | 1000 Hours | External Appearance | ○ | ○ | ○ | ○ | ○ | ○ | ○ | ○ | ○ | ○ | ○ | ○ | ○ |
| | | Transparency | 1.2 | 1.8 | 2.3 | 1.2 | 1.6 | 1.3 | 2.1 | 1.9 | 2.1 | 1.2 | 1.4 | 1.1 | 4.5 |
| | | Yellowing | 2.0 | 2.6 | 4.0 | 2.1 | 2.1 | 2.5 | 1.9 | 2.8 | 2.6 | 2.9 | 2.7 | 2.6 | 2.5 |
| | | Cracking | ○ | ○ | ○ | ○ | ○ | ○ | ○ | ○ | ○ | ○ | ○ | ○ | ○ |
| | | Adhesiveness | 100 | 100 | 100 | 100 | 100 | 100 | 100 | 100 | 100 | 100 | 100 | 100 | 100 |
| | 2000 Hours | External Appearance | ○ | ○ | ○ | ○ | ○ | ○ | ○ | ○ | ○ | ○ | ○ | ○ | ※ |
| | | Transparency | 3.4 | 3.2 | 3.3 | 2.5 | 2.5 | 3.0 | 2.9 | 3.1 | 2.4 | 2.2 | 5.4 | 3.8 | 18.2 |
| | | Yellowing | 2.4 | 3.9 | 3.4 | 3.0 | 2.9 | 3.7 | 3.6 | 2.9 | 3.4 | 3.0 | 4.2 | 4.1 | 5.0 |
| | | Cracking | ○ | ○ | ○ | ○ | ○ | ○ | ○ | ○ | ○ | ○ | ○ | ○ | × |
| | | Adhesiveness | 100 | 100 | 100 | 100 | 100 | 100 | 100 | 100 | 100 | 100 | 30 | 50 | 0 |
| | 4000 Hours | External Appearance | ○ | ○ | ○ | ○ | ○ | ○ | ○ | ○ | ○ | ○ | ※ | ※ | Test Stopped |
| | | Transparency | 6.9 | 5.0 | 5.4 | 4.1 | 4.8 | 5.1 | 7.6 | 5.6 | 6.8 | 6.5 | 19.3 | 11.6 | |
| | | Yellowing | 5.0 | 5.6 | 5.8 | 4.8 | 5.8 | 5.6 | 5.8 | 5.1 | 5.8 | 5.2 | 5.9 | 4.4 | |
| | | Cracking | ○ | ○ | ○ | ○ | ○ | ○ | ○ | ○ | ○ | ○ | × | × | |
| | | Adhesiveness | 100 | 100 | 100 | 100 | 100 | 100 | 100 | 100 | 100 | 100 | 0 | 0 | |

EP 0 939 109 B1

Table 4

| | | | Comparative Example No. | | | | | | | | | | | | |
|---|---|---|---|---|---|---|---|---|---|---|---|---|---|---|---|---|
| | | | 4 | 5 | 6 | 7 | 8 | 9 | 10 | 11 | 12 | 13 | 14 | 15 | 16 |
| Initial Perform-ance | Transparency | | 0.8 | 0.6 | 0.6 | 0.6 | 0.7 | 0.6 | 0.6 | 0.8 | 0.6 | 0.7 | 0.6 | 0.8 | 0.6 |
| | Scarring Resistance | External Appearance | ○ | × | ○ | × | × | ○ | ○ | ○ | ○ | ○ | ○ | × | × |
| | | Hazeness | 1.0 | 11.2 | 5.0 | 10.7 | 12.7 | 0.6 | 0.8 | 2.2 | 4.2 | 0.9 | 1.1 | 10.1 | 12.2 |
| | Adhesiveness | | 100 | 100 | 100 | 100 | 100 | 100 | 100 | 100 | 100 | 100 | 100 | 100 | 100 |
| | Heat Resistance | External Appearance | ○ | ○ | ○ | ○ | ○ | ○ | ○ | ○ | ○ | ○ | ○ | ○ | ○ |
| | | Cracking | × | ○ | ○ | ○ | ○ | × | ○ | ○ | ○ | × | × | ○ | ○ |
| | | Adhesiveness | 100 | 100 | 100 | 100 | 100 | 100 | 100 | 100 | 100 | 80 | 90 | 100 | 100 |
| Chemical Resistance | Acid Resistance | External Appearance | ○ | ○ | ○ | ○ | × | ○ | ○ | ○ | × | ○ | ○ | ○ | ○ |
| | Alkali Resistance | External Appearance | ○ | × | ○ | ○ | ○ | ○ | ○ | ○ | ○ | ○ | ○ | ○ | ○ |
| Accelerated Weather-ablility | 1000 Hours | External Appearance | ○ | Test Stop-ped | ○ | Test Stop-ped | Test Stop-ped | ○ | ○ | ○ | ○ | ○ | ○ | Test Stop-ped | Test Stop-ped |
| | | Transparency | 1.4 | | 5.4 | | | 3.1 | 2.3 | 2.0 | 1.3 | 2.2 | 2.5 | | |
| | | Yellowing | 2.7 | | 1.6 | | | 2.7 | 2.1 | 2.0 | 2.6 | 2.5 | 2.4 | | |
| | | Cracking | ○ | | ○ | | | ○ | ○ | ○ | × | × | × | | |
| | | Adhesiveness | 100 | | 0 | | | 100 | 100 | 100 | 40 | 30 | 40 | | |
| | 2000 Hours | External Appearance | ○ | | Test Stop-ped | | | ○ | ○ | ○ | Test Stop-ped | Test Stop-ped | Test Stop-ped | | |
| | | Transparency | 5.4 | | | | | 7.1 | 10.5 | 10.1 | | | | | |
| | | Yellowing | 4.2 | | | | | 4.1 | 4.1 | 3.3 | | | | | |
| | | Cracking | × | | | | | × | × | × | | | | | |
| | | Adhesiveness | 70 | | | | | 40 | 100 | 0 | | | | | |

**Claims**

1.  A UV curable resin composition for coating which comprises at least the coating film forming components:

    (a) 10 - 70 % by weight of a mono- or bi- functional monomer having a molecular weight of 130 - 700, and having ether bond and one or two acryloyloxy groups per molecule,
    (b) 5 - 60 % by weight of an aliphatic urethane acrylate oligomer,
    (c) 10 - 30 % by weight of a methyl methacrylate polymer having a molecular weight of 10000 to 200000, and containing at least 90 wt.% of methyl methacrylate, and which also includes as necessary ingredients, relative to 100 parts by weight of said coating film forming components:

    (e) 2 - 10 parts by weight of a photopolymerization initiator, and
    (f) 2 - 20 parts by weight of a UV absorber.

2.  The UV curable resin composition for coating use according to Claim 1, wherein said coating film forming components comprise:

    (a) 10 - 70 % by weight of a mono- or bi- functional monomer having a molecular weight of 130 - 700, and having ether bond and one or two acryloyloxy groups per molecule,
    (b) 5 - 60 % by weight of an aliphatic urethane acrylate oligomer,
    (c) 10 - 30 % by weight of a methyl methacrylate polymer having a molecular weight of 10000 to 200000, and containing at least 90 wt.% of methyl methacrylate,
    (d) 5 - 50 % by weight of a polyfunctional monomer having a molecular weight of 250 - 700 and having three or more acryloyloxy groups per molecule, and which also includes as necessary ingredients, relative to 100 parts by weight of said coating film forming components:
    (e) 2 - 10 parts by weight of a photopolymerization initiator, and
    (f) 2 - 20 parts by weight of a UV absorber.

3.  A lamp cover for automobiles comprising a coating film of the UV curable resin composition for coating according to Claim 1 coated onto a lamp cover body made of polycarbonate resin.

4.  A lamp cover for automobiles comprising a coating film of the UV curable resin composition for coating according to Claim 2 coated onto a lamp cover body made of polycarbonate resin.

**Patentansprüche**

1.  UV-härtbare Harzzusammensetzung zum Beschichten, die zumindest die eine Deckschicht bildenden Bestandteile aufweist, nämlich

    (a) 10 bis 70 Gew.-% eines mono- oder bifunktionellen Monomeren, das ein Molekulargewicht von 130 bis 700 aufweist, und das Etherbindungen und eine oder zwei Acryloyloxy-Gruppen pro Molekül aufweist,
    (b) 5 bis 60 Gew.-% eines aliphatischen Urethan/Acrylat-Oligomeren,
    (c) 10 bis 30 Gew.-% eines Methylmethacrylat-Polymeren, das ein Molekulargewicht von 10.000 bis 200.000 aufweist, und das zumindest 90 Gew.-% an Methylmethacrylat aufweist, und das außerdem als notwendige Ingredienzen, relativ bezüglich 100 Gewichtsanteilen der die Deckschicht bildenden Bestandteile, Folgendes aufweist, nämlich
    (e) 2 bis 10 Gewichtsanteile eines Fotopolymerisationsinitiators, und
    (f) 2 bis 20 Gewichtsanteile eines UV-Absorptionsmittels.

2.  UV-härtbare Harzzusammensetzung zu Beschichtungszwecken nach Anspruch 1, bei der die Bestandteile, die die Deckschicht bilden, Folgendes aufweisen, nämlich

    (a) 10 bis 70 Gew.-% eines mono- oder bifunktionalen Monomeren, das ein Molekulargewicht von 130 bis 700 aufweist, und das Etherbindungen und eine oder zwei Acryloyloxy-Gruppen pro Molekül aufweist,
    (b) 5 bis 60 Gew.-% eines aliphatischen Urethan/Acrylat-Oligomeren,
    (c) 10 bis 30 Gew.-% eines Methylmethacrylat-Polymeren, das ein Molekulargewicht von 10.000 bis 200.000 aufweist, und das zumindest 90 Gew.-% an Methylmethacrylat aufweist,

(d) 5 bis 50 Gew.-% eines polyfunktionalen Monomeren, das ein Molekulargewicht von 250 bis 700 aufweist, und das drei oder mehr Acryloyloxy-Gruppen pro Molekül aufweist, und das außerdem als notwendige Ingredienzen, relativ bezüglich 100 Gewichtsanteilen der die Deckschicht bildenden Bestandteile, Folgendes aufweist, nämlich

(e) 2 bis 10 Gewichtsanteile eines Fotopolymerisationsinitiators, und

(f) 2 bis 20 Gewichtsanteile eines UV-Absorptionsmittels.

3. Leuchtenabdeckung für Kraftfahrzeuge mit einer Deckschicht aus der UV-härtbaren Harzzusammensetzung zum Beschichten nach Anspruch 1, die auf einem aus Polycarbonatharz hergestellten Leuchtenabdeckungskörper aufgeschichtet ist.

4. Leuchtenabdeckung für Kraftfahrzeuge mit einer Deckschicht aus der UV-härtbaren Harzzusammensetzung zum Beschichten nach Anspruch 2, die auf einem aus Polycarbonatharz hergestellten Leuchtenabdeckungskörper geschichtet ist.


**Revendications**

1. Composition de résine durcissable par UV pour revêtement qui comprend au moins les composants suivants formant le film de revêtement :

(a) de 10 à 70 % en poids d'un monomère mono- ou bi-fonctionnel ayant un poids moléculaire de 130 à 700, et ayant une liaison éther et un ou deux groupes acryloyloxy par molécule,
(b) de 5 à 60 % en poids d'un oligomère acrylate d'uréthane aliphatique,
(c) de 10 à 30 % en poids d'un polymère méthacrylate de méthyl ayant un poids moléculaire de 10000 à 200000, et comprenant au moins 90 % en poids de méthacrylate de méthyl, et qui comprend également comme ingrédients nécessaires, pour 100 parties en poids desdits composants formant le film de revêtement :
(d) de 2 à 10 parties en poids d'un initiateur de photopolymérisation, et
(e) de 2 à 20 parties en poids d'un absorbeur d'ultraviolets.

2. Composition de résine durcissable par UV pour revêtement selon la revendication 1, dans laquelle lesdits composants formant film de revêtement comprennent :

(a) de 10 à 70 % en poids d'un monomère mono- ou bi-fonctionnel ayant un poids moléculaire de 130 à 700, et ayant une liaison éther et un ou deux groupes acryloyloxy par molécule,
(b) de 5 à 60 % en poids d'un oligomère acrylate d'uréthane aliphatique,
(c) de 10 à 30 % en poids d'un polymère méthacrylate de méthyl ayant un poids moléculaire de 10000 à 200000, et comprenant au moins 90 % en poids de méthacrylate de méthyl,
(d) de 5 à 50 % en poids d'un monomère polyfonctionnel ayant un poids moléculaire de 250 à 700 et ayant trois groupes acryloyloxy ou plus par molécule, et qui comprend également comme ingrédients nécessaires, pour 100 parties en poids desdits composants formant le film de revêtement :
(e) de 2 à 10 parties en poids d'un initiateur de photopolymérisation, et
(f) de 2 à 20 parties en poids d'un absorbeur d'ultraviolets.

3. Ecran protecteur de lampe pour automobiles comprenant un film de revêtement fait à partir de la composition de résine durcissable par UV pour revêtement selon la revendication 1 posé sur un corps d'écran protecteur de lampe fait de résine de polycarbonate.

4. Ecran protecteur de lampe pour automobiles comprenant un film de revêtement fait à partir de la composition de résine durcissable par UV pour revêtement selon la revendication 2 posé sur un corps d'écran protecteur de lampe fait de résine de polycarbonate.